Europäisches Patentamt

(19) European Patent Office

Office européen des brevets

(11) **EP 0 811 653 B1**

(12) **EUROPEAN PATENT SPECIFICATION**

(45) Date of publication and mention
of the grant of the patent:
**24.07.2002 Bulletin 2002/30**

(51) Int Cl.[7]: **C08J 5/18**, C08K 3/00,
C08K 5/00
// C08L67:02

(21) Application number: **97303297.2**

(22) Date of filing: **15.05.1997**

(54) **Biaxially oriented polyester film**

Biaxial orientierter Polyesterfilm

Film de polyester à orientation biaxiale

(84) Designated Contracting States:
**DE FR GB LU**

(30) Priority: **17.05.1996 JP 12322396**

(43) Date of publication of application:
**10.12.1997 Bulletin 1997/50**

(73) Proprietor: **TEIJIN LIMITED**
**Osaka-shi, Osaka 541 (JP)**

(72) Inventors:
• **Ogawa, Tatsuya,**
**c/o Sagamihara Research Center**
**Sagamihara-shi, Kanagawa 229 (JP)**
• **Watanabe, Hideaki,**
**c/o Sagamihara Research Center**
**Sagamihara-shi, Kanagawa 229 (JP)**

(74) Representative: **Hallybone, Huw George et al**
**Carpmaels and Ransford,**
**43 Bloomsbury Square**
**London WC1A 2RA (GB)**

(56) References cited:
**EP-A- 0 311 426          EP-A- 0 453 276**
**EP-A- 0 490 665          EP-A- 0 502 745**
**EP-A- 0 535 240          EP-A- 0 612 790**
**EP-A- 0 737 761          EP-A- 0 765 912**
**US-A- 5 434 000**

• **PATENT ABSTRACTS OF JAPAN vol. 096, no.
002, 29 February 1996 & JP 07 252408 A (TORAY
IND INC), 3 October 1995,**
• **PATENT ABSTRACTS OF JAPAN vol. 095, no.
004, 31 May 1995 & JP 07 011020 A (DIAFOIL CO
LTD), 13 January 1995,**
• **PATENT ABSTRACTS OF JAPAN vol. 016, no.
025 (C-0903), 22 January 1992 & JP 03 239731 A
(DIAFOIL CO LTD), 25 October 1991,**

**Description**

Background of the Invention

This invention relates to a biaxially oriented polyester film. More specifically, it relates to a biaxially oriented polyester film which has excellent windability, abrasion resistance and running durability, can be produced at a low cost and is useful as a base film for a high-speed duplicator magnetic recording medium.

A biaxially oriented polyester film typified by a polyethylene terephthalate film is widely used as a base film for a magnetic recording medium such as a magnetic tape owing to its excellent physical and chemical properties.

Of applications to magnetic tapes, the production of tapes on which software such as movies has been recorded in advance shows remarkable growth lately. Heretofore, such software has been duplicated from a master VTR to several thousands of VTRs at a high speed. However, in recent years, a unrecorded magnetic tape is superposed on a mirror master tape on which software has been recorded and a magnetic field and temperature are applied to the superposed tapes to effect a transfer of the recorded software. In this case, the duplicating speed is extremely high, and in consequence, properties required for the magnetic tape have been changed and are changing, and new properties required for the high-speed duplicator base film are increasing. For example, there are proposed windability at the time when the tape is wound up at a high speed; a surface smoothness for obtaining close contact with the master tape and improving electromagnetic conversion characteristics; improvement of abrasion resistance against a guide roll with which the film comes into contact at the time of duplication; and the like.

Conventionally, with a view to improving windability, inert particles having a large particle diameter are contained in the base film of a magnetic recording medium to improve its air squeeze properties. However, when a large amount of inert particles having a large particle diameter are contained, the surface of a magnetic layer is pushed up by protrusions or protrusions formed by large-sized inert particles are transferred to the surface of a magnetic layer when films are wound up together, thereby greatly deteriorating the surface properties of the magnetic layer of a magnetic tape. Further, the large-sized fine inert particles are shaved off by their contact with a guide roll to generate white dusts, thereby causing a drop-out.

In addition, environment for the abrasion resistance and running durability of a magnetic tape is becoming worse and worse by the use of a surface finished cassette half or guide pin or by the use of a plastic guide pin for a cost reduction. Under the circumstances, improvements of the above properties have been desired much more than before.

JP-A 3-239731 (the term "JP-A" as used herein means an "unexamined published Japanese patent application") discloses a biaxially oriented polyester film containing crosslinked polymer particles (A) whose weight reduction rate after 30 minutes of a treatment at 300°C is not more than 30 % by weight and which has an average particle diameter of 0.05 to 3 $\mu$m and contains ethylene glycol units, particles (B) whose average particle diameter is less than 0.7 time that of the particles (A) and/or particles (C) whose average particle diameter is not less than 1.4 time that of the particles (A). This publication fails to disclose a biaxially oriented polyester film containing all of the particles (A), (B) and (C) simultaneously.

JP-A 7-169031 discloses a biaxially oriented laminate polyester film. One layer (layer A) constituting this laminate polyester film may contain 0.1 to 0.5 % by weight of small-sized particles, which are selected from amorphous titanium oxide and $\theta$ type titanium oxide, having an average particle diameter of 0.05 to 0.3 $\mu$m in addition to 0.05 to 0.5 % by weight of medium-sized inert particles having an average particle diameter of 0.4 to 0.9 $\mu$m and 0.001 to 0.05 % by weight of large-sized inert particles having an average particle diameter of 1.0 to 1.5 $\mu$m. The layer A is characteristically as thin as 0.5 to 2.0 $\mu$m. This publication fails to disclose a single-layer film.

JP-A 7-252408 discloses a biaxially oriented polyester film composed of a polyester composition comprising 0.05 to 3 % by weight of inert particles A having a Moh's hardness of 6 or more and an average particle diameter of 0.05 to 0.5 $\mu$m, 0.05 to 3 % by weight of inorganic particles B having a Moh's hardness of below 6 and an average particle diameter of 0.1 to 1.0 $\mu$m which is larger than that of the particles A, and 0.05 to 3 % by weight of crosslinked polymer particles C having an average particle diameter of 0.1 to 1.0 $\mu$m which is different from that of the particles B by not more than 0.3 $\mu$m. This biaxially oriented polyester film contains large-sized crosslinked polymer particles in a relatively large amount (a lower limit of 0.05 % by weight).

It is an object of the present invention to provide a biaxially oriented polyester film.

It is another object of the present invention to provide a biaxially oriented polyester film which is excellent in windability, smoothness of base surface, abrasion resistance and the like and has such abrasion resistance and running durability to be usable for even an inferior cassette half, guide pin or the like.

It is still another object of the present invention to provide a biaxially oriented polyester film which is useful as a base film for a high-speed duplicator magnetic tape.

Other objects and advantages of the present invention will become apparent from the following description.

According to the present invention, the above objects and advantages of the present invention can be attained by a biaxially oriented polyester film which consists of a polyester composition comprising:

a) 0.001 to 0.03 % by weight of crosslinked polymer particles having an average particle diameter $d_A$ of 0.8 to 1.6 µm,

b) 0.1 to 0.8 % by weight of inert particles having an average particle diameter $d_B$ of 0.4 to 0.8 µm, and

c) 0.05 to 1.0 % by weight of inert inorganic particles having an average particle diameter $d_C$ of 0.01 to 0.3 µm and a Moh's hardness of not less than 7, and which satisfies the following equations (1) and (2):

$$1.5 \leqq d_A/d_B \leqq 3 \tag{1}$$

wherein $d_A$ and $d_B$ are defined as above,

$$SRz/SRa \geqq 20 \tag{2}$$

wherein SRz is a three dimensional 10-points average roughness and SRa is a three dimensional center plane average roughness of a film surface.

Brief Description of the Drawing

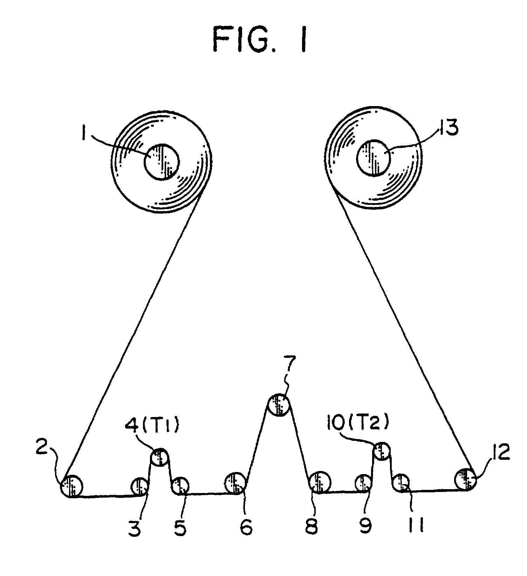

Fig. 1 is a schematic diagram of an apparatus for measuring the high-speed running scratch resistance and abrasion resistance of a biaxially oriented polyester film of the present invention.

Detailed Description of the Invention

The "polyester" as used in the present invention refers to a polyester comprising an aromatic dicarboxylic acid as a main dicarboxylic acid component and an aliphatic glycol as a main glycol component. This polyester is substantially linear and has film-forming properties, particularly film-forming properties by melt molding. Aromatic dicarboxylic acids include terephthalic acid, naphthalene dicarboxylic acid, isophthalic acid, diphenoxyethane dicarboxylic acid, diphenyl dicarboxylic acid, diphenyl ether dicarboxylic acid, diphenyl sulfone dicarboxylic acid, diphenyl ketone dicarboxylic acid, anthracene dicarboxylic acid and the like. Aliphatic glycols include polymethylene glycols having 2 to 10 carbon atoms such as ethylene glycol, trimethylene glycol, tetramethylene glycol, pentamethylene glycol, hexamethylene glycol and decamethylene glycol and alicyclic diols such as cyclohexane dimethanol.

In the present invention, the polyester preferably contains alkylene terephthalate and/or alkylene naphthalate as a main constituent component(s).

Of these polyesters, the preferred are polyethylene terephthalate, polyethylene-2,6-naphthalate and copolymers which contain, for example, terephthalic acid and/or 2,6-naphthalene dicarboxylic acid in a proportion of not less than 80 mol% of the total of all the dicarboxylic acid components, and ethylene glycol in a proportion of not less than 80 mol% of the total of all the glycol components. Not more than 20 mol% of the total of all the acid components may consist of the above aromatic dicarboxylic acids other than terephthalic acid and/or 2,6-naphthalene dicarboxylic acid; aliphatic dicarboxylic acids such as adipic acid and sebacic acid; alicyclic dicarboxylic acids such as cyclohexane-1,4-dicarboxylic acid; and the like. Not more than 20 mol% of the total of all the glycol components may consist of the above glycols other than ethylene glycol; aromatic diols such as hydroquinone, resorcin and 2,2-bis(4-hydroxyphenyl) propane; aliphatic diols having an aromatic ring such as 1,4-dihydroxydimethylene benzene; polyalkylene glycols (polyoxyalkylene glycols) such as polyethylene glycol, polypropylene glycol and polytetramethylene glycol; and the like.

The polyester in the present invention includes also those copolymerized with or bonded to a component derived from an oxycarboxylic acid such as an aromatic oxyacid exemplified by hydroxybenzoic acid and an aliphatic oxyacid exemplified by ω-hydroxycaproic acid in a proportion of not more than 20 mol% based on the total of all dicarboxylic acid components and oxycarboxylic acid components.

The polyester in the present invention further includes those copolymerized with a polycarboxylic acid or polyhydroxy compound having 3 or more functional groups, such as trimellitic acid, pentaerythritol or the like in such an amount that it is substantially linear, for example, not more than 2 mol% of the total of all the acid components.

The polyester is known per se and can be produced by a method known per se.

The biaxially oriented polyester film of the present invention consists of a polyester composition comprising three different kinds of inert particles having different average particle diameters.

First inert particles (to be referred to as "inert particles A" hereinafter) are crosslinked polymer particles having an average particle diameter $d_A$ of 0.8 to 1.6 μm and are contained in an amount of 0.001 to 0.03 % by weight. If the average particle diameter $d_A$ and amount of the inert particles A are below the above ranges, the effect of improving windability will be insufficient disadvantageously, while if the particle size $d_A$ and amount of the inert particles A are above the above ranges, the electromagnetic conversion characteristics and abrasion resistance of a magnetic tape formed therefrom will deteriorate. The average particle diameter $d_A$ of the inert particles A is preferably in the range of 0.9 to 1.5 μm, more preferably 1.0 to 1.4 μm. The amount of the inert particles A is preferably in the range of 0.003 to 0.025 % by weight, more preferably 0.005 to 0.02 % by weight.

The inert particles A are preferably at least one member selected from crosslinked silicone resin particles and crosslinked polystyrene particles. This is because they have high affinity for polyesters and are soft enough to absorb impact applied to their protrusions and the protrusions hardly fall off by a high-speed collision therewith.

The inert particles A preferably have an apparent Young's modulus of 98 to 980 MPa (10 to 100 kgf/mm$^2$), more preferably 98 to 490 MPa (10 to 50 kgf/mm$^2$). If the apparent Young's modulus is less than 98 MPa (10 kgf/mm$^2$) the particles contained in the film cannot withstand stress at the time of stretching and deform, whereby it is difficult to form high protrusions required for providing windability. On the other hand, if the apparent Young's modulus is more than 980 MPa (100 kgf/mm$^2$). the particles will become too hard, have poor impact resistance and are apt to fall off.

Second inert particles (to be referred to as "inert particles B" hereinafter) are particles having an average particle diameter $d_B$ of 0.4 to 0.8 μm and contained in an amount of 0.1 to 0.8 % by weight. If the average particle diameter and amount of the inert particles B are below the above ranges, the slipperiness of the film will deteriorate, the film will be difficult to be wound up, and the running of the film in a VTR will be unstable, while if the average particle diameter and the amount are above the above ranges, abrasion resistance will deteriorate. The average particle diameter $d_B$ of the inert particles B is preferably in the range of 0.4 to 0.7 μm, more preferably 0.4 to 0.6 μm. The amount of the inert particles B is preferably in the range of 0.15 to 0.7 % by weight, more preferably 0.2 to 0.6 % by weight.

Kind of the inert particles B is not limited to a particular one. Preferred examples of the inert particles B include (1) silicon dioxide (including hydrates, quartz sand, quartz and the like); (2) alumina in various crystal forms; (3) silicates containing not less than 30 % by weight of $SiO_2$ [such as amorphous or crystalline clay minerals, alluminosilicates (including calcined products and hydrates), chrysotile, zircon, fly ash and the like]; (4) oxides of Mg, Zn, Zr and Ti; (5) sulfates of Ca and Ba; (6) phosphates of Li, Ba and Ca (including monohydrate and dihydrate); (7) benzoates of Li, Na and K; (8) terephthalates of Ca, Ba, Zn and Mn; (9) titanates of Mg, Ca, Ba, Zn, Cd, Pb, Sr, Mn, Fe, Co and Ni; (10) chromates of Ba and Pb; (11) carbon (such as carbon black, graphite and the like); (12) glass (such as glass powders, glass beads and the like); (13) carbonates of Ca and Mg; (14) fluorite; and (15) Zn. Of these, calcium carbonate is the most preferred.

Third inert particles (to be referred to as "inert particles C" hereinafter) are inert inorganic particles having a Moh's hardness of not less than 7 and an average particle diameter $d_C$ of 0.01 to 0.3 μm and contained in an amount of 0.05 to 1.0 % by weight. If the Moh's hardness of the inert inorganic particles C is less than 7, the scratch resistance will be unsatisfactory disadvantageously. Aluminum oxide (alumina) and spinel type oxides are preferred as the inert particles C. The inert particles C may be used singly or in admixture of two or more. The inert particles C are preferably agglomerates of particles having an average agglomeration rate of 2 to 20. If the average agglomeration rate is above or below the above range, the scratch resistance will be insufficient disadvantageously. The average agglomeration rate is preferably in the range of 2 to 15, more preferably 2 to 10, the most preferably 2 or more but less than 5 from a viewpoint of a scratch resistance improving effect.

When the inert particles C are agglomerates of aluminium oxide (alumina) particles and the alumina is of θ type crystals, advantageously, the scratch resistance improving effect will be large. Further, when the inert particles C are agglomerates of spinel type oxide particles and they are $MgAl_2O_4$, advantageously, the larger scratch resistance improving effect will be obtained.

If the average particle diameter $d_C$ and amount of the inert particles C are below the above ranges, the scratch resistance improving effect will be insufficient disadvantageously. On the other hand, if the particle size and the amount are above the above ranges, the scratch resistance improving effect will be insufficient or the abrasion resistance will deteriorate disadvantageously. The average particle diameter $d_C$ of the inert inorganic particles C is preferably in the range of 0.03 to 0.25 μm, more preferably 0.05 to 0.2 μm. The amount is preferably in the range of 0.1 to 0.7 % by weight, more preferably 0.15 to 0.4 % by weight, the most preferably 0.2 or more but less than 0.25 % by weight.

In the biaxially oriented polyester film of the present invention, which contains all of the above three kinds of inert particles A, B and C, it is necessary that the ratio of the average particle diameter $d_A$ of the inert particles A (crosslinked polymer particles) to the average particle diameter $d_B$ of the inert particles B satisfy the following expression (1).

$$1.5 \leqq d_A/d_B \leqq 3 \qquad\qquad (1)$$

If the value of $d_A/d_B$ is less than 1.5, a windability improving effect will be insufficient, while if the value is more than 3, the electromagnetic conversion characteristics and abrasion resistance of a magnetic tape when it is fabricated into a tape will deteriorate, although the windability improving effect will be recognized. The value of $d_A/d_B$ is preferably in the range of 1.7 to 2.7, more preferably 1.9 to 2.4.

That is, it is desirable that the value satisfies the following equation (1)-1,

$$1.7 \leqq d_A/d_B \leqq 2.7 \tag{1-1}$$

more preferably the following equation (1)-2.

$$1.9 \leqq d_A/d_B \leqq 2.4 \tag{1-2}$$

Further, the ratio of the three dimensional 10-points average roughness SRz to the three dimensional center plane average roughness SRa of the film surface of the biaxially oriented polyester film of the present invention must satisfy the following equation (2).

$$SRz/SRa \geqq 20 \tag{2}$$

If the value of SRz/SRa is less than 20, the windability improving effect will be insufficient.

The value of SRz/SRa preferably satisfies the following equation (2)-1,

$$SRz/SRa \geqq 22 \tag{2-1}$$

and it is more preferably not less than 24, particularly preferably not less than 28.

The biaxially oriented polyester film of the present invention is a single-layer film.

SRa is preferably in the range of 10 to 25 nm, more preferably 10 to 23 nm, particularly preferably 10 to 21 nm.

SRz is preferably in the range of 300 to 600 nm, more preferably 320 to 550 nm, particularly preferably 340 to 500 nm.

Further, the biaxially oriented polyester film of the present invention preferably has a centerline average roughness Ra of 10 to 25 nm, more preferably 10 to 22 nm, particularly preferably 10 to 19 nm. If the centerline average roughness Ra is less than 10 nm, the surface will be too flat with the result that the effect of improving windability and running durability will be small, while if it is more than 25 nm, the surface will be too rough with the result that the electromagnetic conversion characteristics will deteriorate disadvantageously when the biaxially oriented polyester film is made into a magnetic tape.

The Young's modulus in the longitudinal direction of the biaxially oriented polyester film of the present invention is not less than 3920 MPa (400 kgf/mm$^2$) preferably not less than 4410 MPa (450 kgf/mm$^2$) and the Young's modulus in the transverse direction thereof is not less than 4900 MPa (500 kgf/mm$^2$); preferably not less than 5880 MPa (600 kgf/mm$^2$). When the Young's modulus in the respective longitudinal and transverse directions is in the above ranges, the thickness of a magnetic tape for long-time recording formed from the biaxially oriented polyester film of the present invention can be reduced advantageously.

The biaxially oriented polyester film of the present invention preferably has a film thickness of 3 to 25 μm, more preferably 5 to 25 μm, particularly preferably 10 to 20 μm.

The biaxially oriented polyester film of the present invention preferably has a windability reference of not more than 100 at a wind-up rate of 200 m/min. When the windability reference is not more than 100, the windability improving effect is remarkable advantageously when it is used as a base film for a high-speed duplicator.

If the windability reference is larger than 100, its winding form is bad with an irregular edge face or in an extreme case, its wound roll loosens during winding when the film is wound at a high speed. The windability reference at a wind-up rate of 200 m/min is more preferably not more than 85, particularly preferably not more than 70.

The biaxially oriented polyester film of the present invention can be basically obtained by conventionally known methods or methods accumulated by the industry. For example, it can be obtained by forming an unstretched film and then, biaxially stretching the resulting unstretched film. The unstretched film having an intrinsic viscosity of 0.35 to 0.9 dl/g can be obtained by melt extruding a polyester into a film form, for example, at a temperature of a melting point (Tm:°C) to (Tm + 70)°C, and solidifying, by quenching, the film.

The unstretched film can be formed into a biaxially oriented film in accordance with any of biaxially oriented film production methods which have been accumulated heretofore. For example, the unstretched film is stretched to 2.5 to 7.0 times in one direction (longitudinal or transverse direction) at a temperature of (Tg - 10) to (Tg + 70)°C (Tg: glass transition temperature of a polyester) and then to 2.5 to 7.0 times in the direction perpendicular to the above direction (transverse direction when first stretched in the longitudinal direction) at a temperature of Tg to (Tg + 70)°C. In this case, the area stretch ratio is preferably set to 9 to 32 times, more preferably 12 to 32 times. The stretching means may be either simultaneous biaxial stretching or sequential biaxial stretching. Further, the biaxially oriented film can be heat-set at a temperature of (Tg + 70) to Tm°C. For example, a polyethylene terephthlate film is preferably heat-set at 190 to 230°C. The heat-setting time is 1 to 60 sec, for example.

The biaxially oriented polyester film of the present invention is excellent in the improvement of high-speed windability, base surface smoothness and abrasion resistance required for a base film for a high-speed duplicator magnetic recording medium as well as the improvement of abrasion resistance and running durability against an inferior cassette half or guide pin. Therefore, the biaxially oriented polyester film of the present invention is extremely useful as a magnetic recording medium.

According to the present invention, therefore, there is also provided a magnetic recording medium comprising the biaxially oriented polyester film of the present invention as a base film and a magnetic layer on the film.

The present invention will be further detailed hereinafter with reference to Examples.

The physical property values and characteristics in the present invention including Examples were measured or are defined as follows.

(1) Average particle diameter (DP)

Particles were measured for diameters with a centrifugal particle size analyzer CP-50 supplied by Shimadzu Corporation, and there was prepared a cumulative curve from individual diameters of particles and the amounts thereof which were calculated on the basis of the resultant centrifugal sedimentation curve. The cumulative curve was read for a diameter of a particle corresponding to a 50 mass percent, and the so-read value was taken as an average particle diameter (see "Particle Size Measuring Technique" pages 242-247, 1975, issued by Nikkan Kogyo Press).

(2) Apparent Young's modulus of particles

A micro compression tester MCTM-201 manufactured by Shimadzu Corporation was used. A diamond presser was moved down at a constant load rate (29 mgf/second) to exert external force on one particle. The apparent Young's modulus was determined according to the following equation in which $Y$ was a Young's modulus, $P$ was a load (kgf) when the particle was broken, $Z$ was a deviation (mm) of the presser when the particle was broken and $d$ was a diameter (mm) of the particle. The above procedure was repeated 10 times, and an average of the ten measurement data was taken as apparent Young's modulus of the particle.

$$Y = 2.8 P/\pi dZ$$

(3) Average agglomeration rate of particles

A film containing particles was sliced into a flake as thin as 100 nm in a cross-sectional direction thereof. When the particles were observed at a magnification of about 100,000X using a transmission electron microscope (such as JEM-1200EX manufactured by JEOL Ltd.), the minimum size particles (primary particles) which could not be divided further could be observed. The number of primary particles constituting each of 100 agglomerates (secondary particles) was counted from this photomicrograph and a value obtained by dividing the total number of primary particles by the number of measured agglomerates was taken as an average agglomeration rate.

(4) Three dimensional center plane average roughness (SRa) and three dimensional 10-points average roughness (SRz)

The three dimensional surface profile of a film surface was imaged under the conditions of a needle diameter of 2 μmR, a needle pressure of 30 mg, a measurement length of 1 mm, a sampling pitch of 42 μm, a cut-off of 0.25 mm, a magnification in the longitudinal direction of 20,000X, a magnification in the transverse direction of 200X, and 100 scanning lines, using a three dimensional roughness meter (SE-3CK supplied by Kosaka Laboratory Co., Ltd.). A surface $S_M$ portion was taken out on a center plane from the obtained profile, and a value given from the following equation was taken as SRa by plotting rectangular coordinate axes, X and Y axes, on the center plane of this portion and an axis perpendicular to the center plane as a Z axis.

$$SRa = \frac{1}{S_M}\int_0^{L_X}\int_0^{L_Y}|f(x,y)|\,d_x d_y$$

wherein $S_M = L_X \times M_Y$

The difference between the average height of first to fifth highest mountains and the average depth of first to fifth deepest valleys on a plane parallel to an average line of a portion which remains after a reference area portion was removed from the profile was taken as SRz.

(5) Film surface roughness (Ra)

A film was measured for a centerline average roughness (Ra) according to JIS-B0601 with a needle-contacting type roughness tester SURFCODER SE-30C supplied by Kosaka Laboratory Co., Ltd. The measurement conditions were as follows.

(a) Radius of contacting needle top: 2 $\mu$m
(b) Measurement pressure: 30 mg
(c) Cut-off: 0.25 mm
(d) Measurement length: 2.5 mm
(e) How to obtain data: One sample was measured six times. The largest measurement value was excluded, and Ra was expressed in terms of an average of the remaining five measurement values.

(6) Abrasion resistance against calender

The running surface of a base film were evaluated for abrasion resistance, using a three-rolls minisuper calender having a nylon roll(s) and a steel roll(s). The treatment temperature was 80°C, the linear pressure applied to the film was 200 kg/cm, and the film velocity was 100 m/min. When the film was caused to run a total length of 4,000 m, the abrasion resistance of the base film was evaluated by abrasion dust adhering to the top roll of the calender.

<Five rating>

1st rate: No abrasion dust on nylon roll
2nd rate: Almost no abrasion dust on nylon roll
3rd rate: A little abrasion dust on nylon roll but it was removed with a dry cloth.
4th rate: Abrasion dust on nylon roll is hardly removed with a dry cloth but was removed with a solvent such as acetone.
5th rate: Heavy abrasion dust on nylon roll and the abrasion dust was hardly removed even with a solvent.

(7) Abrasion resistance against blade

The edge of a blade (a blade for testing industrial razors manufactured by GKI in USA) was applied to a film cut to 1/2-inch in width at a right angle under an atmosphere of a temperature of 20°C and a humidity of 60 % and pushed into the film 2 mm, and the film was caused to run (friction) at a running rate of 100 m/min and a tension at inlet of 50 g. After the film ran 100 m, the amount of shavings adhered to the blade were evaluated.

⊚ : The deposition of shavings adhered to the blade is less than 0.5 mm.
○: The deposition of shavings adhered to the blade is 0.5 mm or more and less than 1.0 mm.
Δ: The deposition of shavings adhered to the blade is 1.0 mm or more and less than 2.0 mm.
✕: The deposition of shavings adhered to the blade is 2.0 mm or more.

(8) Scratch resistance and abrasion resistance in high-speed running

The above resistance was measured as follows, using an apparatus shown in Fig. 1.

In Fig. 1, reference numeral 1 denotes a feed reel, 2 a tension controller, 3, 5, 6, 8, 9 and 11 free rollers, 4 a tension detector (inlet), 7 a fixing rod, 10 a tension detector (outlet), 12 a guide roller and 13 a take-up reel.

A film cut to 1/2-inch in width was contacted to the fixed rod 7 at an angle $\theta$ of 60° under atmosphere of a temperature of 20°C and a humidity of 60 % and was caused to run 200 mm at a running rate of 300 m/min to ensure that the tension at inlet became 50 g. After running, abrasion dust adhered to the fixed rod 7 and scratch in the film were evaluated.

The above evaluation was carried out in the following three methods concerning the fixed rod.

Method A: A 6 $\phi$ tape guide (surface roughness Ra = 0.015 $\mu$m) made of SUS304 and fully surface-finished was used.

Method B: A 6 $\phi$ tape guide (surface roughness Ra = 0.15 $\mu$m) which was formed by bending a SUS sintered plate into a cylindrical form and insufficiently surface-finished was used.

Method C: A 6 $\phi$ tape guide made from a carbon black-containing polyacetal was used.

<Evaluation of abrasion resistance>

◎ :	No abrasion dust is seen.
○:	A slight amount of abrasion dust is seen.
Δ:	The presence of abrasion dust is seen at a glance.
✕:	Abrasion dust is heavily adhered.

<Evaluation of scratch resistance>

◎ :	No scratch is seen.
○:	1 to 5 scratches are seen.
Δ:	6 to 15 scratches are seen.
✕:	16 or more scratches are seen.

(9) Low-speed repeated running friction coefficient ($\mu$k) and scratch resistance

The above properties were measured as follows, using the apparatus shown in Fig. 1.

A nonmagnetic surface of a magnetic tape was contacted to the fixed rod 7 at an angle $\theta = (152/180)\pi$ radian (152°) under an atmosphere of a temperature of 20°C and a humidity of 60 %, and moved (friction) at a rate of 200 cm/min. The tension at outlet ($T_2$: g) was detected by the outlet tension detector after the film made 50 round trips when the tension controller 2 was adjusted such that the tension at inlet $T_1$ became 50 g and the running friction coefficient $\mu$k was calculated from the following equation.

$$\mu k = (2.303/\theta) \log (T_2/T_1) = 0.868 \log (T_2/35)$$

If the running friction coefficient ($\mu$k) was not less than 0.25, when the film was caused to run repeatedly in a VTR, its running became unstable. Therefore, the film having a running friction coefficient of not less than 0.25 was evaluated as poor running durability.

The above evaluation was carried out in the following three methods concerning the fixed rod.

Method A: A 6 $\phi$ tape guide (surface roughness Ra = 0.015 $\mu$m) made of SUS304 and fully surface-finished was used.

Method B: A 6 $\phi$ tape guide (surface roughness Ra = 0.15 $\mu$m) which was formed by bending a SUS sintered plate into a cylindrical form and insufficiently surface-finished was used.

Method C: A 6 $\phi$ tape guide made from a carbon black-containing polyacetal was used.

As for scratch resistance, scratch on the nonmagnetic surface of the tape after running was evaluated based on the following criteria.

◎ : No scratch is seen.
○: 1 to 5 scratches are seen.
Δ: 6 to 15 scratches are seen.
✕: 16 or more scratches are seen.

Magnetic tapes were prepared as follows.
100 parts by weight (to be simply referred to as "part" hereinafter) of $\gamma$-$Fe_2O_3$ and the following composition were kneaded and dispersed with a ball mill for 12 hours.

| | |
|---|---|
| Polyester polyurethane | 12 parts |
| Vinyl chloride-vinyl acetate-maleic anhydride copolymer | 10 parts |
| $\alpha$-alumina | 5 parts |
| Carbon black | 1 part |
| Butyl acetate | 70 parts |
| Methyl ethyl ketone | 35 parts |
| Cyclohexanone | 100 parts |

Then, the following components were added.

| | |
|---|---|
| Fatty acid: Oleic acid | 1 part |
| Fatty acid: Palmitic acid | 1 part |
| Fatty acid ester (amyl stearate) | 1 part |

The resultant mixture was kneaded for 10 to 30 minutes, and after 7 parts of an ethyl acetate solution containing 25 % of a triisocyanate compound was added, the mixture was shear-dispersed at a high rate for 1 hour to prepare a magnetic coating liquid.
The so-obtained coating liquid was applied to a polyester film such that the dry thickness was 3.5 μm.
The coating was subjected to orientation treatment in a direct current magnetic field and dried at 100°C. Then, the film was calendered and slit to a width of 1/2 inch to obtain a magnetic tape.

(10) Windability reference

In the apparatus shown in Fig. 1, a film in 1/2-inch width was set without allowing to pass the fixed rod 7, and was caused to run 200 m at a running rate of 200 m/min under an atmosphere of a temperature of 20°C and a humidity of 60 %. Its edge position was detected by a CCD camera right before it was taken up by the take-up reel 13.
Variation amount of this edge position is expressed as a waveform with respect to a time axis and the waveform is calculated from the following equation as a windability reference.

$$\text{Windability reference} = \sqrt{\frac{1}{t}\int_0^1 f(x)^2 dx}$$

wherein t is a measurement time (sec) and x is a variation amount of end face (μm).

(11) Windability

In the apparatus shown in Fig. 1, a magnetic tape produced by the above-mentioned method was set without allowing to pass the fixed rod 7 and was caused to run 500 m at a running rate of 400 m/min, and the wind-up of the film on a take-up reel and the shape of a roll of the magnetic tape were evaluated.

<Evaluation>

○: The displacement of the end face of a wound roll is not more than 1 mm.
Δ: The displacement of the end face of a wound roll is more than 1 mm.
×: Winding is impossible.

(12) Electromagnetic characteristics

A "VHS" VTR (BR6400, supplied by Victor Co. of Japan, Ltd.) was remodeled, and a signal having a sinewave at 4 MHz was inputted to a recording/reproduction head through an amplifier to record it on a magnetic tape. The signal was reproduced and the reproduced signal was inputted to a spectrum analyzer. A noise generated at a distance of 0.1 MHz from the carrier signal 4 MHz was measured, and the carrier/noise (C/N ratio was expressed in terms of dB unit. A magnetic tape obtained in Comparative Example 8 was measured in this manner to obtain a C/N ratio, which was taken as the standard (±0 dB). A difference between the C/N ratio of the above magnetic tape and the C/N ratio of the magnetic tape obtained in Comparative Example 8 was taken as electromagnetic characteristics.
The following examples are given to further illustrate the present invention.

Examples 1 to 8 and Comparative Examples 1 to 14

Dimethyl terephthalate and ethylene glycol were polymerized by a conventional method using manganese acetate as an ester exchange catalyst, antimony trioxide as a polymerization catalyst, phosphorous acid as a stabilizer and particles shown in Tables 1 and 2 as a lubricant to obtain polyethylene terephthalate having an intrinsic viscosity of 0.56 (measured in orthochlorophenol at 35°C).
The pellets of this polyethylene terephthalate were dried at 170°C for 3 hours and then, fed to the hopper of an extruder. The mixture was molten at a temperature of 280 to 300°C, and the molten polymer was let pass through a 1 mm slit die and extruded onto a rotary cooling drum having a surface temperature of 20°C to obtain an unstretched film having a surface finishing of about 0.3s and a thickness of 200 μm.
The thus obtained unstretched film was preheated at 75°C, and was further heated between low-speed rolls and high-speed rolls from 15 mm above by three IR heaters having a surface temperature of 800°C to stretch it to 3.2 times, quenched and supplied to a stenter to be stretched to 4.3 times at 120°C in the transverse direction. The obtained biaxially oriented film was heat-set at 205°C for 5 second to obtain a heat-set biaxially oriented polyester film having a thickness of 14 μm.
The properties of the thus obtained film are shown in Tables 3 and 4.

## Table 1

| | Inert particles contained in film | | | | | | | | Average particle diameter ratio of particles A to particles B $(d_A/d_B)$ |
|---|---|---|---|---|---|---|---|---|---|
| | Crosslinked polymer particles A | | | Inert particles B | | Inert inorganic particles C | | | |
| | Kind and average particle diameter $(d_A)$ of particles ($\mu$ m) | Content of particles (%) | Apparent Young's modulus (MPa) | Kind and average particle diameter $(d_B)$ of particles ($\mu$ m) | Content of particles (%) | Kind and average particle diameter $(d_C)$ of particles ($\mu$ m) | Content of particles (%) | Average agglomeration rate of particles (number of particles) | |
| Ex. 1 | Silicone resin 1.2 | 0.01 | 490 (50kgf/mm²) | Calcium carbonate 0.6 | 0.2 | $\theta$ type aluminum oxide 0.1 | 0.2 | 4.5 | 2.0 |
| Ex. 2 | Silicone resin 1.2 | 0.02 | 490 (50kgf/mm²) | Calcium carbonate 0.6 | 0.2 | $\theta$ type aluminum oxide 0.1 | 0.2 | 4.5 | 2.0 |
| Ex. 3 | Silicone resin 1.2 | 0.005 | 490 (50kgf/mm²) | Calcium carbonate 0.6 | 0.2 | $\theta$ type aluminum oxide 0.1 | 0.2 | 4.5 | 2.0 |
| Ex. 4 | Silicone resin 1.5 | 0.01 | 490 (50kgf/mm²) | Calcium carbonate 0.6 | 0.2 | $\theta$ type aluminum oxide 0.1 | 0.2 | 4.5 | 2.5 |
| Ex. 5 | Crosslinked polystyrene 1.2 | 0.01 | 245 (25kgf/mm²) | Calcium carbonate 0.6 | 0.2 | $\theta$ type aluminum oxide 0.1 | 0.2 | 4.5 | 2.0 |
| Ex. 6 | Silicone resin 1.2 | 0.01 | 490 (50kgf/mm²) | Calcium carbonate 0.6 | 0.2 | Spinel oxide ($MgAl_2O_4$) 0.1 | 0.2 | 4.2 | 2.0 |
| Ex. 7 | Silicone resin 1.2 | 0.01 | 490 (50kgf/mm²) | Calcium carbonate 0.6 | 0.2 | $\theta$ type aluminum oxide 0.1 | 0.15 | 4.5 | 2.0 |
| | | | | | | Spinel oxide ($MgAl_2O_4$) 0.1 | 0.05 | 4.2 | |
| Ex. 8 | Silicone resin 1.2 | 0.01 | 490 (50kgf/mm²) | Calcium carbonate 0.6 | 0.2 | $\theta$ type aluminum oxide 0.1 | 0.2 | 12.4 | 2.0 |

Ex. : Example

EP 0 811 653 B1

## Table 2

| | Inert particles contained in film | | | | | | | | Average particle diameter ratio of particles A to particles B $(d_A/d_B)$ |
| | Crosslinked polymer particles A | | | Inert particles B | | Inert inorganic particles C | | | |
| | Kind and average particle diameter $(d_A)$ of particles $(\mu m)$ | Content of particles (%) | Apparent Young's modulus (MPa) | Kind and average particle diameter $(d_B)$ of particles $(\mu m)$ | Content of particles (%) | Kind and average particle diameter $(d_C)$ of particles $(\mu m)$ | Content of particles (%) | Average agglomeration rate of particles (number of particles) | |
|---|---|---|---|---|---|---|---|---|---|
| Comp. Ex. 1 | - | - | - | Calcium carbonate 0.6 | 0.2 | $\theta$ type aluminum oxide 0.1 | 0.2 | 4.5 | - |
| Comp. Ex. 2 | - | - | - | Calcium carbonate 0.4 | 0.2 | $\theta$ type aluminum oxide 0.1 | 0.2 | 4.5 | - |
| Comp. Ex. 3 | Silicone resin 1.2 | 0.01 | 490 (50kgf/mm²) | - | - | $\theta$ type aluminum oxide 0.1 | 0.2 | 4.5 | - |
| Comp. Ex. 4 | Silicone resin 1.2 | 0.01 | 490 (50kgf/mm²) | Calcium carbonate 0.6 | 0.2 | - | - | - | 2.0 |
| Comp. Ex. 5 | Silicone resin 0.7 | 0.01 | 490 (50kgf/mm²) | Calcium carbonate 0.6 | 0.2 | $\theta$ type aluminum oxide 0.1 | 0.2 | 4.5 | 1.2 |
| Comp. Ex. 6 | Silicone resin 2.0 | 0.03 | 490 (50kgf/mm²) | Calcium carbonate 0.6 | 0.2 | $\theta$ type aluminum oxide 0.1 | 0.2 | 4.5 | 3.3 |
| Comp. Ex. 7 | Silicone resin 1.2 | 0.0005 | 490 (50kgf/mm²) | Calcium carbonate 0.6 | 0.2 | $\theta$ type aluminum oxide 0.1 | 0.2 | 4.5 | 2.0 |

Comp. Ex. : Comparative Example

(to be continued)

Table 2 (continued)

| | Inert particles contained in film | | | | | | | | Average particle diameter ratio of particles A to particles B ($d_A/d_B$) |
| | Crosslinked polymer particles A | | | Inert particles B | | Inert inorganic particles C | | | |
| | Kind and average particle diameter ($d_A$) of particles ($\mu$ m) | Content of particles (%) | Apparent Young's modulus (MPa) | Kind and average particle diameter ($d_B$) of particles ($\mu$ m) | Content of particles (%) | Kind and average particle diameter ($d_C$) of particles ($\mu$ m) | Content of particles (%) | Average agglomeration rate of particles (number of particles) | |
|---|---|---|---|---|---|---|---|---|---|
| Comp. Ex. 8 | Silicone resin 1.2 | 0.05 | 490 (50kgf/mm²) | Calcium carbonate 0.6 | 0.2 | $\theta$ type aluminum oxide 0.1 | 0.2 | 4.5 | 2.0 |
| Comp. Ex. 9 | Spherical silica 1.2 | 0.01 | 1960 (200kgf/mm²) | Calcium carbonate 0.6 | 0.2 | $\theta$ type aluminum oxide 0.1 | 0.2 | 4.5 | 2.0 |
| Comp. Ex.10 | Silicone resin 1.2 | 0.01 | 490 (50kgf/mm²) | Calcium carbonate 0.6 | 0.2 | spherical silica 0.1 | 0.2 | 1.5 | 2.0 |
| Comp. Ex.11 | Silicone resin 1.2 | 0.01 | 490 (50kgf/mm²) | Calcium carbonate 0.6 | 0.2 | $\theta$ type aluminum oxide 0.1 | 0.2 | 1.7 | 2.0 |
| Comp. Ex.12 | Silicone resin 1.2 | 0.01 | 490 (50kgf/mm²) | Calcium carbonate 0.6 | 0.2 | $\theta$ type aluminum oxide 0.1 | 0.2 | 25.3 | 2.0 |
| Comp. Ex.13 | Silicone resin 1.0 | 0.01 | 490 (50kgf/mm²) | Calcium carbonate 0.8 | 0.2 | $\theta$ type aluminum oxide 0.1 | 0.2 | 4.5 | 1.3 |
| Comp. Ex.14 | Silicone resin 1.2 | 0.01 | 490 (50kgf/mm²) | Calcium carbonate 0.6 | 1.2 | $\theta$ type aluminum oxide 0.1 | 0.2 | 4.5 | 2.0 |

Comp. Ex. : Comparative Example

EP 0 811 653 B1

## Table 3

| | Film thickness ($\mu$ m) | SRz/SRa | Ra (nm) | Abrasion resistance against calender (rating) | Abrasion resistance against blade | High-speed running | | | | | |
|---|---|---|---|---|---|---|---|---|---|---|---|
| | | | | | | Scratch resistance | | | Abrasion resistance | | |
| | | | | | | Method A | Method B | Method C | Method A | Method B | Method C |
| Ex. 1 | 14.0 | 29 | 15 | 1 | ◎ | ◎ | ◎ | ◎ | ◎ | ◎ | ◎ |
| Ex. 2 | 14.0 | 33 | 16 | 2 | ○ | ◎ | ◎ | ◎ | ◎ | ◎ | ◎ |
| Ex. 3 | 14.0 | 26 | 15 | 1 | ◎ | ◎ | ◎ | ◎ | ◎ | ◎ | ◎ |
| Ex. 4 | 14.0 | 35 | 16 | 2 | ◎ | ◎ | ◎ | ◎ | ◎ | ◎ | ◎ |
| Ex. 5 | 14.0 | 29 | 15 | 1 | ◎ | ◎ | ◎ | ◎ | ◎ | ◎ | ◎ |
| Ex. 6 | 14.0 | 29 | 15 | 1 | ◎ | ◎ | ◎ | ◎ | ◎ | ◎ | ◎ |
| Ex. 7 | 14.0 | 29 | 15 | 1 | ◎ | ◎ | ◎ | ◎ | ◎ | ◎ | ◎ |
| Ex. 8 | 14.0 | 28 | 15 | 1 | ◎ | ◎ | ◎ | ○ | ◎ | ◎ | ○ |

Ex. : Example

(to be continued)

EP 0 811 653 B1

## Table 3 (continued)

| | Low-speed repeated running | | | | | | Windability reference | Windability | Electromagnetic conversion characteristics C/N |
| | Scratch resistance | | | Running friction coefficient | | | | | |
| | Method A | Method B | Method C | Method A | Method B | Method C | | | |
| Ex. 1 | ◎ | ◎ | ◎ | 0.21 | 0.21 | 0.20 | 60 | ◯ | +1.8 |
| Ex. 2 | ◎ | ◎ | ◎ | 0.20 | 0.20 | 0.19 | 50 | ◯ | +1.5 |
| Ex. 3 | ◎ | ◎ | ◎ | 0.22 | 0.22 | 0.22 | 70 | ◯ | +1.9 |
| Ex. 4 | ◎ | ◎ | ◎ | 0.21 | 0.21 | 0.19 | 50 | ◯ | +1.6 |
| Ex. 5 | ◎ | ◎ | ◎ | 0.21 | 0.21 | 0.21 | 60 | ◯ | +1.8 |
| Ex. 6 | ◎ | ◎ | ◎ | 0.21 | 0.21 | 0.20 | 60 | ◯ | +1.8 |
| Ex. 7 | ◎ | ◎ | ◎ | 0.21 | 0.21 | 0.20 | 60 | ◯ | +1.8 |
| Ex. 8 | ◎ | ◎ | ◯ | 0.20 | 0.20 | 0.20 | 60 | ◯ | +1.7 |

Ex. : Example

EP 0 811 653 B1

Table 4

| | Film thickness ($\mu$m) | SRz/SRa | Ra (nm) | Abrasion resistance against calender (rating) | Abrasion resistance against blade | High-speed running | | | | | |
|---|---|---|---|---|---|---|---|---|---|---|---|
| | | | | | | Scratch resistance | | | Abrasion resistance | | |
| | | | | | | Method A | Method B | Method C | Method A | Method B | Method C |
| Comp.Ex. 1 | 14.0 | 18 | 15 | 1 | ◎ | ◎ | ◎ | ◎ | ◎ | ◎ | ◎ |
| Comp.Ex. 2 | 14.0 | 15 | 12 | 1 | ◎ | ◎ | ◎ | ◎ | ◎ | ◎ | ◎ |
| Comp.Ex. 3 | 14.0 | 60 | 7 | 1 | ◎ | ○ | ◎ | △ | ○ | ◎ | △ |
| Comp.Ex. 4 | 14.0 | 18 | 15 | 1 | ◎ | × | × | △ | ○ | ○ | ○ |
| Comp.Ex. 5 | 14.0 | 19 | 15 | 1 | ◎ | ◎ | ◎ | ◎ | ◎ | ◎ | ◎ |
| Comp.Ex. 6 | 14.0 | 48 | 19 | 4 | △ | ◎ | ◎ | ◎ | △ | △ | ○ |
| Comp.Ex. 7 | 14.0 | 19 | 15 | 1 | ◎ | ◎ | ◎ | ◎ | ◎ | ◎ | ◎ |
| Comp.Ex. 8 | 14.0 | 37 | 18 | 4 | × | ◎ | ◎ | ◎ | ○ | ○ | ◎ |
| Comp.Ex. 9 | 14.0 | 29 | 15 | 4 | △ | △ | △ | × | △ | △ | × |
| Comp.Ex.10 | 14.0 | 29 | 15 | 1 | ◎ | △ | △ | △ | △ | △ | △ |
| Comp.Ex.11 | 14.0 | 29 | 15 | 1 | ◎ | △ | △ | △ | △ | △ | △ |
| Comp.Ex.12 | 14.0 | 28 | 16 | 2 | ○ | △ | × | × | △ | △ | × |
| Comp.Ex.13 | 14.0 | 19 | 17 | 1 | ◎ | ◎ | ◎ | ○ | ◎ | ◎ | ○ |
| Comp.Ex.14 | 14.0 | 22 | 27 | 5 | × | ○ | ○ | ○ | ○ | △ | ○ |

Comp. Ex. : Comparative Example

(to be continued)

EP 0 811 653 B1

EP 0 811 653 B1

## Table 4 (continued)

| | Low-speed repeated running | | | | | | Windability reference | Windability | Electromagnetic conversion characteristics C/N |
| | Scratch resistance | | | Running friction coefficient | | | | | |
| | Method A | Method B | Method C | Method A | Method B | Method C | | | |
|---|---|---|---|---|---|---|---|---|---|
| Comp.Ex. 1 | ◎ | ◎ | ◎ | 0.21 | 0.21 | 0.21 | 150 | △ | +1.9 |
| Comp.Ex. 2 | ◎ | ◎ | ◎ | 0.23 | 0.23 | 0.24 | 200 | × | +2.5 |
| Comp.Ex. 3 | ○ | ◎ | △ | 0.32 | 0.31 | 0.31 | 140 | △ | +3.6 |
| Comp.Ex. 4 | × | × | △ | 0.23 | 0.23 | 0.22 | 60 | ○ | +1.8 |
| Comp.Ex. 5 | ◎ | ◎ | ◎ | 0.21 | 0.21 | 0.20 | 120 | △ | +1.8 |
| Comp.Ex. 6 | ◎ | ◎ | ◎ | 0.23 | 0.23 | 0.22 | 50 | ○ | -0.7 |
| Comp.Ex. 7 | ◎ | ◎ | ◎ | 0.21 | 0.21 | 0.20 | 110 | △ | +1.8 |
| Comp.Ex. 8 | ◎ | ◎ | ◎ | 0.19 | 0.19 | 0.18 | 40 | ○ | 0 |
| Comp.Ex. 9 | ○ | ○ | × | 0.22 | 0.22 | 0.28 | 60 | ○ | +1.8 |
| Comp.Ex.10 | △ | △ | △ | 0.22 | 0.22 | 0.24 | 60 | ○ | +1.8 |
| Comp.Ex.11 | △ | △ | △ | 0.24 | 0.26 | 0.23 | 60 | ○ | +1.8 |
| Comp.Ex.12 | △ | × | × | 0.27 | 0.27 | 0.28 | 60 | ○ | +1.5 |
| Comp.Ex.13 | ◎ | ◎ | ○ | 0.21 | 0.21 | 0.22 | 110 | △ | +1.3 |
| Comp.Ex.14 | ○ | ○ | ○ | 0.20 | 0.20 | 0.21 | 80 | ○ | -2.0 |

Comp. Ex. : Comparative Example

As is evident from Tables 3 and 4, the biaxially oriented polyester films of the present invention have excellent windability and abrasion resistance as well as scratch resistance, abrasion resistance and running durability against various types of tape guides, while they maintain excellent electromagnetic conversion characteristics. Thus, they are extremely excellent in the overall properties.

As a consequence, the biaxially oriented polyester film of the present invention has excellent windability, base surface smoothness and abrasion resistance required for a base film for a high-speed duplicator magnetic tape as well as abrasion resistance and running durability against an inferior cassette half, guide pin and the like, and can be produced at a low cost. Therefore, the film has extremely excellent total performance as a magnetic recording medium.

## Claims

1. A biaxially oriented single layer polyester film which consists of a polyester composition comprising:

   a) 0.001 to 0.03 % by weight of crosslinked polymer particles having an average particle diameter $d_A$ of 0.8 to 1.6 $\mu$m and an apparent Youngs' modulus of 98 to 980 MPa (10 to 100 kgf/mm$^2$).
   b) 0.1 to 0.8 % by weight of inert particles having an average particle diameter $d_B$ of 0.4 to 0.8 $\mu$m, and
   c) 0.05 to 1.0 % by weight of agglomerates of inert inorganic particles having an average particle diameter $d_C$ of 0.01 to 0.3 $\mu$m, an average agglomeration rate of 2 to 20, and a Moh's hardness of not less than 7, and which satisfies the following equations (1) and (2):

$$1.5 \leqq d_A/d_B \leqq 3 \tag{1}$$

   wherein $d_A$ and $d_B$ are defined as above,

$$SRz/SRa \geqq 20 \tag{2}$$

   wherein SRz is a three dimensional 10-points average roughness of a film surface and SRa is a three dimensional center plane average roughness of a film surface.
   said polyester film having a Youngs' modulus in a longitudinal direction of 3920MPa (400kgf/mm$^2$) or more and a Youngs' modulus in a transverse direction of 4900MPa (500Kgf/mm$^2$) or more.

2. The biaxially oriented polyester film of claim 1, wherein the crosslinked polymer particles are at least one member selected from the group consisting of crosslinked silicone particles and crosslinked polystyrene particles.

3. The biaxially oriented polyester film of claim 1, wherein the inert particles having an average particle diameter $d_B$ is calcium carbonate.

4. The biaxially oriented polyester film of claim 1, wherein the inert inorganic particles having an average particle diameter $d_C$ is at least one member selected from the group consisting of aluminum oxide and spinel type oxides.

5. The biaxially oriented polyester film of claim 1,
   wherein the crosslinked polymer particles having an average particle diameter $d_A$ and the inert particles having an average particle diameter $d_B$ satisfy the following equation (1)-1:

$$1.7 \leqq d_A/d_B \leqq 2.7 \tag{1-1}$$

   wherein $d_A$ and $d_B$ are defined as above

6. The biaxially oriented polyester film of claim 1 which satisfies the following equation (2)-1:

$$SRz/SRa \geqq 22 \tag{2-1}$$

wherein SRz and SRa are defined as above.

7. The biaxially oriented polyester film of claim 1 which has a three dimensional center plane average roughness SRa of a film surface in the range of 10 to 25 nm.

8. The biaxially oriented polyester film of claim 1 which has a centerline average roughness Ra of a film surface in the range of 10 to 25 nm.

9. The biaxially oriented polyester film of claim 1 which has a three dimensional 10-points average roughness SRz of a film surface in the range of 300 to 600 nm.

10. The biaxially oriented polyester film of claim 1 which has a windability reference at a wind-up rate of 200 m/min of not more than 100.

11. The biaxially oriented polyester film of claim 1 which has a film thickness of 3 to 25 µm.

12. The biaxially oriented polyester film of claim 1 which has a film thickness of 5 to 25 µm.

13. Use of the film according to any one of the preceding claims as a base film for a magnetic recording medium.

14. A magnetic recording medium comprising the biaxially oriented polyester film of claim 1 as a base film and a magnetic layer on the film.

**Patentansprüche**

1. Biaxial orientierte Polyestereinschichtfolie, die aus einer Polyesterzusammensetzung besteht, umfassend:

   a) 0,001 bis 0,03 Gew.-% vernetzte Polymerteilchen mit einem mittleren Teilchendurchmesser $d_A$ von 0,8 bis 1,6 µm und einem scheinbaren Youngschen Modul von 98 bis 980 MPa (10 bis 100 kgf/mm$^2$),

   b) 0,1 bis 0,8 Gew.-% inerte Teilchen mit einem mittleren Teilchendurchmesser $d_B$ von 0,4 bis 0,8 µm und

   c) 0,05 bis 1,0 Gew.-% Agglomerate von inerten anorganischen Teilchen mit einem mittleren Teilchendurchmesser $d_C$ von 0,01 bis 0,3 µm, einer mittleren Agglomerationsrate von 2 bis 20 und einer Mohsschen Härte von nicht weniger als 7 und

   die den nachstehenden Gleichungen (1) und (2) genügt:

   $$1,5 \leq d_A/d_B \leq 3 \qquad (1)$$

   worin $d_A$ und $d_B$ wie vorstehend definiert sind,

   $$SRz/SRa \geq 20 \qquad (2)$$

   worin SRz eine mittlere dreidimensionale 10-Punkte-Rauheit einer Folienoberfläche darstellt und SRa eine mittlere dreidimensionale Rauheit der mittigen Ebene der Folienoberfläche darstellt,
   wobei die Polyesterfolie einen Youngschen Modul in Längsrichtung von 3920 MPa (400 kgf/mm$^2$) oder mehr und einen Youngschen Modul in Querrichtung von 4900 MPa (500 kgf/mm$^2$) oder mehr aufweist.

2. Biaxial orientierte Polyesterfolie nach Anspruch 1, wobei die vernetzten Polymerteilchen mindestens ein Mitglied, ausgewählt aus der Gruppe, bestehend aus vernetzten Siliconteilchen und vernetzten Polystyrolteilchen, sind.

3. Biaxial orientierte Polyesterfolie nach Anspruch 1, wobei die inerten Teilchen mit einem mittleren Teilchendurchmesser $d_B$ Calciumcarbonat sind.

4. Biaxial orientierte Polyesterfolie nach Anspruch 1, wobei die inerten anorganischen Teilchen mit einem mittleren Teilchendurchmesser $d_C$ mindestens ein Mitglied, ausgewählt aus der Gruppe, bestehend aus Aluminiumoxid und Oxiden vom Spinelltyp, sind.

5. Biaxial orientierte Polyesterfolie nach Anspruch 1, wobei die vernetzten Polymerteilchen mit einem mittleren Teilchendurchmesser $d_A$ und die inerten Teilchen mit einem mittleren Teilchendurchmesser $d_B$ der nachstehenden Gleichung (1)-1 genügen:

$$1{,}7 \leq d_A/d_B \leq 2{,}7 \qquad\qquad (1)\text{-}1$$

worin $d_A$ und $d_B$ wie vorstehend definiert sind.

6. Biaxial orientierte Polyesterfolie nach Anspruch 1, die der nachstehenden Gleichung (2)-1 genügt:

$$SRz/SRa \geq 22 \qquad\qquad (2)\text{-}1$$

worin SRz und SRa wie vorstehend definiert sind.

7. Biaxial orientierte Polyesterfolie nach Anspruch 1, die eine mittlere dreidimensionale Rauheit SRa der mittigen Ebene einer Folienoberfläche im Bereich von 10 bis 25 nm aufweist.

8. Biaxial orientierte Polyesterfolie nach Anspruch 1, die eine mittlere Mittellinienrauheit Ra einer Folienoberfläche im Bereich von 10 bis 25 nm aufweist.

9. Biaxial orientierte Polyesterfolie nach Anspruch 1, die eine mittlere dreidimensionale 10-Punkte-Rauheit SRz einer Folienoberfläche im Bereich von 300 bis 600 nm aufweist.

10. Biaxial orientierte Polyesterfolie nach Anspruch 1, die eine Aufwickelbarkeits-Referenz bei einer Aufwickelgeschwindigkeit von 200 m/min von nicht mehr als 100 aufweist.

11. Biaxial orientierte Polyesterfolie nach Anspruch 1, die eine Foliendicke von 3 bis 25 $\mu$m aufweist.

12. Biaxial orientierte Polyesterfolie nach Anspruch 1, die eine Foliendicke von 5 bis 25 $\mu$m aufweist.

13. Verwendung der Folie nach einem der vorangehenden Ansprüche als eine Grundfolie für ein magnetisches Aufzeichnungsmedium.

14. Magnetisches Aufzeichnungsmedium, umfassend die biaxial orientierte Polyesterfolie nach Anspruch 1 als Grundfolie und eine magnetische Schicht auf der Folie.

**Revendications**

1. Film de polyester à simple couche et à orientation biaxiale, qui se compose d'une composition de polyester comprenant :

a) 0,001 à 0,03 % en poids de particules de polymère réticulé présentant un diamètre moyen de particules $d_A$ compris entre 0,8 et 1,6 $\mu$m et un module de Young apparent compris entre 98 et 980 MPa (10 et 100 kgf/mm$^2$), b) 0,1 à 0,8 % en poids de particules inertes présentant un diamètre moyen de particules $d_B$ compris entre 0,4 et 0,8 $\mu$m, et c) 0,05 à 1,0 % en poids d'agglomérats de particules inorganiques inertes présentant un diamètre moyen de particules $d_C$ compris entre 0,01 et 0,3 $\mu$m, un taux d'agglomération moyen compris entre 2 et 20, et une dureté d'après l'échelle de Mohs supérieure ou égale à 7,

et qui satisfait aux équations (1) et (2) suivantes :

$$1,5 \leq d_A/d_B \leq 3 \tag{1}$$

où $d_A$ et $d_B$ sont tels que définis précédemment,

$$SRz/SRa \geq 20 \tag{2}$$

où SRz est une rugosité moyenne tridimensionnelle sur 10 points d'une surface de film et SRa est une rugosité moyenne tridimensionnelle sur plan central d'une surface de film,
ledit film de polyester présentant un module de Young dans une direction longitudinale de 3 920 MPa (400 kgf/mm$^2$) ou plus et un module de Young dans une direction transversale de 4 900MPa (500 kgf/mm$^2$) ou plus.

2. Le film de polyester à orientation biaxiale de la revendication 1, dans lequel les particules du polymère réticulé représentent au moins un élément sélectionné parmi le groupe composé de particules de silicone réticulée et de particules de polystyrène réticulé.

3. Le film de polyester à orientation biaxiale de la revendication 1, dans lequel les particules inertes présentant un diamètre moyen de particules $d_B$ sont du carbonate de calcium.

4. Le film de polyester à orientation biaxiale de la revendication 1, dans lequel les particules inorganiques inertes présentant un diamètre moyen de particules $d_C$ représente au moins un élément sélectionné parmi le groupe composé d'oxyde d'aluminium et d'oxydes de type spinelle.

5. Le film de polyester à orientation biaxiale de la revendication 1, dans lequel les particules de polymère réticulé présentant un diamètre moyen de particules $d_A$ et les particules inertes présentant un diamètre moyen de particules dB satisfont à l'équation (1)-1 suivante :

$$1,7 \leq d_A/d_B \leq 2,7 \tag{1-1}$$

où $d_A$ et $d_B$ sont tels que définis précédemment.

6. Le film de polyester à orientation biaxiale de la revendication 1, qui satisfait à l'équation suivante (2)-1 :

$$SBz/SRa \geq 22 \tag{2-1}$$

où SRz et SRa sont tels que définis précédemment.

7. Le film de polyester à orientation biaxiale de la revendication 1, qui présente une rugosité moyenne tridimensionnelle sur plan central SRa d'une surface de film comprise dans la gamme allant de 10 à 25 nm.

8. Le film de polyester à orientation biaxiale de la revendication 1, qui présente une rugosité moyenne sur la ligne médiane Ra d'une surface de film comprise dans la gamme allant de 10 à 25 mn.

9. Le film de polyester à orientation biaxiale de la revendication 1, qui présente une rugosité moyenne tridimensionnelle sur 10 points SRz d'une surface de film comprise dans la gamme allant de 300 à 600 nm.

10. Le film de polyester à orientation biaxiale de la revendication 1, qui présente une référence de bobinabilité selon une vitesse d'enrouleur de 200 m/min qui n'est pas supérieure à 100.

11. Le film de polyester à orientation biaxiale de la revendication 1, qui présente une épaisseur de film comprise entre 3 et 25 $\mu$m.

12. Le film de polyester à orientation biaxiale de la revendication 1, qui présente une épaisseur de film comprise entre 5 et 25 $\mu$m.

**13.** Utilisation du film selon l'une quelconque des revendications précédentes comme film de base d'un support magnétique d'enregistrement.

**14.** Support magnétique d'enregistrement comprenant le film polyester à orientation biaxiale de la revendication 1 comme film de base, et une couche magnétique sur le film.

# FIG. I